(19) **Europäisches Patentamt**
**European Patent Office**
**Office européen des brevets**

(11) **EP 4 063 475 A1**

(12) **EUROPEAN PATENT APPLICATION**

(43) Date of publication:
**28.09.2022 Bulletin 2022/39**

(21) Application number: **22160605.6**

(22) Date of filing: **07.03.2022**

(51) International Patent Classification (IPC):
**C12G 3/07** *(2006.01)* **B65D 8/00** *(2006.01)*
**C12H 1/16** *(2006.01)* **C12H 1/22** *(2006.01)*

(52) Cooperative Patent Classification (CPC):
**C12H 1/22; B65D 9/04; C12G 3/07; C12H 1/16**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **21.03.2021 US 202117207702**

(71) Applicants:
• **Bolton, Brian**
  **Lawrenceville GA 30044 (US)**

• **Barrel Integrity Solutions**
  **Lawrenceville GA 30044 (US)**

(72) Inventors:
• **The inventor has waived his right to be thus mentioned.**

(74) Representative: **Gillespie, Richard**
  **Inventorship**
  **Suite 10050**
  **5 Fitzwilliam Square**
  **Dublin 2, D02 R744 (IE)**

(54) **METHOD AND APPARATUS FOR EXTRACTING PHENOLS FROM A WOOD BARREL**

(57) The present invention relates to a method and apparatus for extracting phenols from a wood barrel whereby one or more of the wood barrels filled with a distilled spirit or wine are placed inside a container to which a gas transfer system is connected. The gas transfer system is provided with a pumping means for removing air from the cavity, filling the cavity with a gas, pressurizing the cavity with the gas, and reducing the pressure of the cavity. Means are provided for controlling the distilled spirit or wine evacuating from and absorbing and impregnating the porous structures of the wood barrel.

Fig. 0001

EP 4 063 475 A1

**Description**

**Technical Field**

The present invention relates to a novel method of and apparatus for aging alcoholic beverages.

**Background Art**

It is well known in the art and widespread for many years to age and mature a distilled spirit or wine in an oak barrel until it possesses the desirable properties (e.g. color, flavor, taste, and aroma). White Oak and European Oak are the preferred species of wood because their cellular structures create an impervious barrier, minimizing leakage of the distilled spirit or wine from the barrel. The species of oak the barrel is constructed from is dependent on the geography and the regulation of the distilled spirit. For example, the United States Federal Standards of Identity for Distilled Spirits require bourbon to be aged in new charred white oak barrels (The Federal Standards of Identity for Distilled Spirits, 1969). The French Appellation D'origine Controlee require Cognac to be aged in French oak barrels (Product specification for the Cognac or Eau-de-vie de Cognac or Eau-de-vie des Charentes controlled appellation of origin, 2018). The Scotch Whiskey Regulations 2009 require Scotch whiskey to be aged in new or used oak casks (Definition of "Scotch Whiskey" and categories of Scotch Whiskey, 2009). There is no regulation for the species of wood used for a wine barrel.

In the manufacture of the barrel, staves are cut in a desired shape from seasoned oak. The standard dimensions of a stave for a 53-gallon whiskey barrel are 91.44 cm length, and 3.81 cm depth. There are 32 to 35 staves used in the construction of a whiskey barrel. The standard dimensions of a stave for a 225 liter Bordeaux barrel are 4.99 cm length and 22 mm depth. The actual depth the barrel manufacturer planes the stave to is determined by the individual distillery's or winery's specifications. The depth of the stave determines the amount of oxygen transmission and contributes to the profile of the distilled spirit or wine. The size of the barrel determines its interior surface area (sa) and volume (v). The interior surface area of the barrel and the volume of distilled spirit or wine have a specific percentage (sa/v). A hole is drilled in one stave for filling, extracting from, and emptying the barrel. During construction, the staves are aligned lengthwise, bent under pressure by a cable, and bound by two steel hoops at the midsection. For a distilled spirit barrel the interior of the entire barrel may be heat treated, i.e., either toasted or charred. Char levels of 1, 2, 3, or 4 are the barrel industry standards. The char levels impart various nuanced flavors to and filter the distilled spirit. The time the barrel is allowed to burn determines the level of char. A wine barrel may be toasted. Toast levels of heavy, medium, or light are the industry standards. The top and bottom of the barrel have a wooden, round, flat head also of oak. The top and bottom of the barrel is bent under pressure to seat the top and bottom head in the notches of the staves. Both ends are bound by steel hoops. The barrel is filled with a distilled spirit or wine and the barrel hole is sealed with a bung.

Barrels are often stored in a warehouse on their side in ricks, on pallets, or standing upright on the ground, which allow for airflow throughout the aging and maturation process in the warehouses. A warehouse may or may not be temperature controlled. Changes in climate affect the movement of the distilled spirit or wine into and out of the porous structures of the wood barrel. For a whiskey barrel the demarcation of penetration of the distilled spirit into the stave is commonly referred to as the red line. At various stages of aging the bung may be removed by the distiller or vintner and a small sample of the distilled spirit or wine extracted and analyzed for quality and taste.

The length of time a distilled spirit is to be aged is dependent on the regions' regulations. For example, the Scotch Whiskey Regulations 2009 require Scotch whiskey to be aged for a minimum of three years (Definition of "Scotch Whiskey" and categories of Scotch Whiskey, 2009). The length of time a wine is to be aged in a barrel is not regulated, however typical aging times is 6 to 30 months, shorter for whites and longer for reds.

Evaporation is the costliest problem that occurs during the aging process of distilled spirits. Evaporation rates vary by distillery or winery and are variable from barrel to barrel. The average evaporation rate per barrel according to some distilleries and wineries is five percent per year. Due to the evaporation of the distilled spirit over an aging period of eight years, the surface area to volume ratio (sa/v) decreases from 33% to 23%. The decrease in the sa/v decreases the efficiency and efficacy of the ageing process. Under normal aging conditions, the end of an eight-year aging period of a distilled spirit the estimated reduction of a barrel's volume due to evaporation is from 53 gallons in the first year to 31.8 gallons at the end of the eighth year.

**Summary of invention**

The present invention relates to a method and apparatus for extracting phenols from a wood barrel whereby one or more of wood barrels filled with a distilled spirit or wine are placed inside a container to which a gas transfer system is connected. The placement of the barrel in the container creates a cavity. The gas transfer system is provided with a pumping means for removing air from the cavity, filling the cavity with a gas, pressurizing the cavity with the gas, and reducing the pressure of the cavity, allowing for the distilled to evacuate from and absorb and impregnate the porous structures of the wood of the barrel. Means are provided for controlling the pressurizing and reducing the pressure of the cavity. The invention maintains the integrity and construct of the wood barrel.

The calculation of the pressure of a gas is determined by the application of the Janka scale (Meier, 2021). The Janka scale is the hardness of a species of wood required to embed a 11.28 mm diameter steel ball into the wood to a depth of half the balls diameter, 5.64 mm.

The Pressure Equivalent is the result of and may be approximated by the equation;

$$P_e = \left(\frac{d_{wa}}{d_s}\right)(P_s)\left(\frac{\rho_{ds}}{\rho_s}\right)$$

**Math. 1**

where $P_e$ = Pressure equivalent (Pa), $d_s$ = ½ diameter of steel ball (mm), $d_{wa}$ = depth into wood a (mm), Ps = Pressure on steel ball (Pa), $p_{ds}$ = density of distilled spirit (kg/m$^3$), $p_s$ = density of steel (kg/m$^3$);

$$1.92e+5 = \left(\frac{1}{5.64}\right)(9.31e+6)\left(\frac{920.58}{7899.99}\right)$$

**Math. 2**

Half the steel ball's diameter 5.64 mm penetrates the wood. Penetration of the distilled spirit into the wood layer is, by published research stated to range from 1 mm to 2 mm, the Janka Hardness of White Oak is 1,350 lbf (9.31e+6 Pa), the average density of a distilled spirit is 920.58 kg/m$^3$ the density of steel is 7,899.99 kg/m$^3$, therefore the Pressure Equivalent is 1.92e+5.

The Pressure derived is the result of and may be approximated by the equation;

$$P_d = P_e\left(\frac{(m_{gw} \times mc_{gw}) - (m_{dw} \times mc_{dw})}{m_{gw}}\right)\left(\frac{\rho_{ds}}{\rho_{H_2O}}\right)$$

**Math. 3**

where $P_d$ = the Pressure derived (Pa), $P_e$ = Pressure equivalent (Pa), $m_{gw}$ = mass of green wood (kg), $mc_{gw}$ = moisture content of green wood (%), $m_{dw}$ = mass of dry wood (kg), $mc_{dw}$ = moisture content of dry wood (%), $p_{H2O}$ = density of $H_2O$ (kg/m$^3$), $p_{ds}$ = density of distilled spirit (kg/m$^3$);

$$6.75e+4 = (1.92e+5)\left(\frac{(1026 \times .47) - (758 \times .12)}{1026}\right)\left(\frac{920.58}{1000.03}\right)$$

**Math. 4**

The Pressure equivalent = 1.92e+5, the mass of green white oak is 1026 kg, the moisture content (mc) of green white oak is 47%, the mass of dry white oak is 758 kg, the moisture content of dry white oak is 12%, the average density of a distilled spirit is 920.58 kg/m$^3$, the density of $H_2O$ is 1,000.03 kg/m$^3$, therefore the Pressure derived is 6.75e+4.

The pressurization of the gas in the container is the result of and may be approximated by the equation;

$$P_g = \frac{d_{wb} P_d}{\left( \frac{d_{wa}}{\left( \frac{P_d}{P_e} \right)} \right)}$$

**Math. 5**

where $P_g$ is the pressure of the gas (Pa), $d_{wb}$ = desired depth into wood b (mm), $d_{wa}$ = depth into wood a (mm), $P_e$ = Pressure equivalent (Pa), $P_d$ = Pressure derived (Pa);

$$4.74e + 4 = \frac{2(6.75e + 4)}{\left( \frac{1}{\left( \frac{6.75e + 4}{1.92e + 5} \right)} \right)}$$

**Math. 6**

The desired depth of the distilled spirit into the wood is 2 mm, the Pressure derived is 6.75e+4, the Pressure equivalent is 1.92e+5, therefore the Pressure of the gas in the container is 4.74e+4.

Reducing the pressure by 4.74e+4 Pa allows the distilled spirit to penetrate 2.0 mm into the wood. An increase of pressure of 4.74e+4 Pa drives the distilled spirit 2.0 mm to the boundary of the interchange of the wood and charcoal layer.

The method and apparatus' alteration of the pressure of the cavity by 4.74e+4 Pa by a prescribed number of cycles achieves the extraction of the phenols from the wood barrel containing a distilled spirit.

The Pressure to drive the distilled spirit into the charcoal layer is the result of and may be approximated by the equation;

$$P_c = d_c \Big/ \left( \frac{d_{wa}}{\left( \frac{P_d}{P_e} \right)} \right) (P_d) \left( \frac{\rho_c}{\rho_{wo}} \right)$$

**Math. 7**

where $P_c$ = the pressure of the distilled spirit into the char (Pa), $d_c$ = depth of distilled spirit into the char layer (mm), $P_e$ = Pressure equivalent (Pa), $P_d$ = Pressure derived (Pa), $\rho_c$ = density of wood charcoal (kg/m3), $\rho_{wo}$ = density of white oak (kg/m3);

$$3.12e + 4 = 4.8 \Big/ \left( \frac{1}{\left( \frac{6.75e + 4}{1.92e + 5} \right)} \right) (6.75e + 4) \left( \frac{207.99}{758.0} \right)$$

**Math. 8**

The depth of the charcoal layer is determined by the barrel manufacture's level of char of the barrel (char 1, char 2, char 3, char 4), according to the specifications of the distillery customer. Charcoal layer depths range from 3.2 mm to 6.4 mm. The most common char is #3 with a char depth of 4.8 mm. The Pressure equivalent is 1.92e+5, the Pressure derived is 6.75e+4, the density of charcoal is 207.99 kg/m$^3$, the density of white oak is 758.0 kg/m$^3$, A pressure of 3.12e+4 Pa will drive a distilled spirit 4.8 mm into the charcoal layer.

The Pressure of the distilled spirit against the wall of the barrel is the result of and may be approximated by the equation;

$$P_w = (p_{ds}gh) + p_{ex}$$
**Math. 9**

where $P_w$ = the pressure of the distilled spirit against the wall of the barrel (Pa), $p_{ds}$ = the density of the distilled spirit (kg/m$^3$), g = the gravitational acceleration (m/s$^2$), h = the height of the barrel at its girth (m), $p_{ex}$ = the pressure at the exterior of the barrel (Pa);

$$1.06e + 5 = (920.58)(9.81)(.597) + (1.01e + 5)$$
**Math. 10**

The density of the distilled spirit is 920.58, the gravitational acceleration is 9.81, the interior girth of a 53-gallon oak barrel is .597 m diameter, the pressure at the exterior of the barrel is 1.01e+5. The pressure of the distilled spirit on the interior wall of the wood barrel is 1.06e+5 Pa. That pressure will drive the distilled spirit 4.8 mm into the char layer.

The depth of the distilled spirit into the wood of the barrel is the result of and may be approximated by the equation;

$$d_{wd} = \left( \frac{(P_w - P_c)}{P_d} \right) \left( \frac{d_{wa}}{\left( \frac{P_d}{P_e} \right)} \right)$$
**Math. 11**

where $d_{wd}$ is the depth of the distilled spirit into the wood layer.

$$3.17 = \left( \frac{(1.06e + 5) - (3.12e + 4)}{(6.75e + 4)} \right) \left( \frac{1}{\left( \frac{6.75e + 4}{1.92e + 5} \right)} \right)$$
**Math. 12**

The pressure of the distilled spirit on the interior wall of the wood barrel is 1.06e+5 Pa. That pressure will drive the distilled spirit 3.17 mm into the wood layer.

The Pressure to drive the $O^2$ into the dry wood up to the saturated wood layer and the distilled spirit out of the wood layer up to the boundary of the char layer is the result of and may be approximated by the equation;

$$P_{sw} = P_d + \left(\left(\frac{(d_{st} - d_{wd} - d_c)}{\left(\frac{d_{wa}}{\left(\frac{P_d}{P_e}\right)}\right)}\right) P_d \left(\frac{\rho_{O2}}{\rho_{ds}}\right)\right)$$

**Math. 13**

where $P_{sw}$ is the pressure of O2 into the saturated wood (Pa), $d_{st}$ is the width of the stave (mm), $\rho_{O2}$ is the density of O2 (kg/m$^3$);

$$6.75e + 4 = (6.75e + 4)$$
$$+ \left(\left(\frac{23.81 - 3.17 - 4.8}{\left(\frac{1}{\left(\frac{6.75e + 4}{1.92e + 5}\right)}\right)}\right) (6.75e + 4) \left(\frac{.089}{920.58}\right)\right)$$

**Math. 14**

The pressure to drive the distilled spirit to the boundary of the interchange of the wood and char layer is 6.75e+4.

The pressure of the gas in the cavity and the pressure of the distilled spirit against the wall of the barrel creates a differential pressure (delta P). Changes of the differential pressure allows the distilled spirit to absorb into and evacuate from the porous structures of the wood.

During a 12-month period, according to an analysis of climatic data (Climate Data Online, 2021) there are 1,300 iterations of the barometric pressure reaching a high. The mean time of the duration of the barometric low to barometric high iterations is 03:32:00 (hh:mm:ss). The mean time of the duration of the barometric rest is 01:28:00. At this time of barometric rest the distilled spirit attains a state of hydrostatic equilibrium. There are 1,300 iterations of the barometric pressure reaching a low. The mean time of the duration of the barometric high to barometric low iterations is 01:27:00. The mean time of the duration of the barometric rest is 00:22:30 (hh:mm:ss). At this time of barometric rest the distilled spirit attains a state of hydrostatic equilibrium. The total cycle time is 06:49:30.

Extracting phenols from a wood barrel that contains wine.

The Pressure Equivalent is the result of and may be approximated by the equation;

$$2.06e + 5 = \left(\frac{1}{5.64}\right)(9.31e + 6)\left(\frac{984.97}{7899.99}\right)$$

**Math. 15**

The average density of a wine is 984.97 kg/m$^3$, therefore the Pressure equivalent is 2.06e+5.

The Pressure derived is the result of and may be approximated by the equation;

$$7.73e + 4 = (2.06e + 5) \left( \frac{(1026 \times .47) - (758 \times .12)}{1026} \right) \left( \frac{984.97}{1000.03} \right)$$

**Math. 16**

The Pressure derived is 7.73e+4.

The pressurization of the gas in the container is the result of and may be approximated by the equation;

$$1.16e + 5 = 4 / \left( \left( \frac{1}{\left( \frac{7.73e + 4}{2.06e + 5} \right)} \right) (7.73e + 4) \right)$$

**Math. 17**

Penetration of the wine into the wood layer is, by published research stated to range from 3 mm to 4 mm (de Pracomtal, 2014). It takes 1.16e+5 Pa to drive the wine 4.0 mm into and out of white oak.

The Pressure of the wine against the wall of the barrel is the result of and may be approximated by the equation;

$$1.08e+5 = (984.97)(9.81)(.695) + 1.01e+5$$

**Math. 18**

The interior girth of a 225L wine barrel is .695 m diameter. The pressure of the wine on the interior wall of the wood barrel is 1.08e+5 Pa. That pressure drives the wine 3.71 mm into the wood.

The pressure of the cavity and the internal pressure of the barrel create a differential pressure (delta P). The change of the differential pressures allows the wine to absorb into and evacuate from the porous structures of the wood. The method and apparatus' alteration of the pressure of the cavity by 1.08e+5 Pa by a prescribed number of cycles achieves the extraction of the phenols from the wood barrel containing a wine.

Atmospheric air has a composition of nitrogen 78.08%, oxygen 20.95%. and other gasses .97%. Replacing the atmospheric air in the cavity with oxygen yields an increase in the composition of oxygen by approximately 79.05%. This factor improves the oxygenation processes of the wood and the distilled spirit or wine (Dominguez, 2022). The oxygenation factor then reduces the barometric cycles from approximately 1,300 to 303. The reduction in the number of cycles reduces the one-year equivalent process from 365 days to 78.5 days.

A rapid decrease or increase in pressure in the cavity may result in the distilled spirit collapsing the critical structural and filtration properties of the charcoal layer of a barrel filled with a distilled spirit.

A rapid decrease in pressure in the cavity would cause the distilled spirit or wine to penetrate too deep into the porous structures of the wood barrel imparting undesired qualities of the wood into the distilled spirit or wine.

The pressure of the cavity of the container will be gradually increased and gradually decreased. That is to say, the gas will be introduced into and removed from the container at a controlled rate such that the rate at which the pressure is increased and decreased slow enough to allow the distilled spirit or wine in the wood barrel to evacuate from and absorb and impregnate the porous structures of the wood.

The Invention's method and apparatus allows for a sufficient rate for the distilled spirit or wine to evacuate from and absorb and impregnate the porous structures of the wood and prohibit the distilled spirit or wine to penetrate too deep into the wood.

The precise pressure values and rate is subject to a number of variables including but not limited to the size and composition of the wood barrel, the volume of the distilled spirit or wine in the barrel, the temperature of the container, the density of the distilled spirit or wine, and the depth of the charcoal layer (de Abreu Neto, 2018). Hence an approximation in the pressure, cycles, time, pressurizing rate, and the reduction of pressure rate for a given system is necessary.

The invention allows for the input, control, and monitoring the values of high pressure, low pressure, cycle time, rest time, and number of cycles of the process performed by the apparatus so that the final product may achieve the desirable color, flavor, aroma, taste, and body of a distilled spirit or wine.

The invention presents a problem that the sum of the pressure, cycles, or time approximations may be at a rate above or below acceptable tolerances. The solution to the problem is to analyze and compare at predetermined intervals, the gas chromatograph of the product being processed by the invention to the gas chromatograph of the desired finished product to determine a margin of error, and if necessary, change the processing variable of pressure, cycle or time, reducing the margin of error to an acceptable tolerance, thereby mitigating product risk.

The pressures in the cavity and the internal pressures of the barrel create a differential pressure (delta P). The change of the differential pressures allows the distilled spirit or wine to absorb into and evacuate from the porous structures of the wood.

In order to stabilize and keep the wood barrel from rolling or shifting in the container, the container preferably includes a support frame and serves to hold the wood barrel in place.

One example of a container is a vessel. Other types of containers may be used, consistent with the spirit of the invention.

One example of a standard wood barrel is a 53-gallon whiskey barrel. Other sizes of wood barrels may be used, consistent with the spirit of the invention.

One example of a barrel stave thickness is 23.81 mm. Other sizes of stave thicknesses may be used, consistent with the spirit of the invention.

The placement and orientation of the wood barrel's top and bottom may be either on the x axis or the y axis of the container. Stated another way, the barrel may be standing on its bottom or be laying on its side.

The barrel may be filled with distilled spirit or wine prior to being placed in the container. The barrel may be filled with distilled spirit or wine prior to processing, consistent with the spirit of the invention.

The invention, consistent with the distillery or winery industry practice, retains the construct and integrity of a wood barrel.

By reducing the number of cycles, the Invention reduces an eight-year aging period for a standard 53-gallon barrel containing a distilled spirit to 627 days (1.7 years).

By reducing the number of cycles, the Invention reduces a one-year aging period for a standard 225-liter barrel containing wine to 84 days.

At the end of the invention's 627 day process the barrel volume reduces from 53 gallons to 48.3 gallons. The Invention is a solution to the evaporation problem, preventing the estimated loss of 16.6 gallons of distilled spirit.

Janka Hardness is an established U.S. lumber industry standard for all species of wood. The invention utilizes the mathematical conversion of the density of the steel ball and its depth into white oak and the density and mass of water with the density and mass of distilled spirit and its depth into white oak to determine the necessary pressure variables.

In the warehouse the oak barrel during a 12-month period is exposed to an average barometric high and barometric low given the location of the warehouse. An example is a high and low of 1.01e+5 Pa and 9.58e+4 Pa respectively.

## Brief description of drawings

FIG. 0001 is a view of a barrel 101 inside a container 102 having a cavity 103.
FIG. 0002 is a dimensional side view of a stave of a whiskey barrel, its reference points (201 - 204), and the sequential pressure effects (205 - 208) in millimeters.
FIG. 0003 is a dimensional side view of a stave of a wine barrel, its reference points (301 - 303), and the sequential pressure effects (304 - 306) in millimeters.

## Description of Embodiments

Hereinafter, embodiments will be described in detail with reference to the drawings.

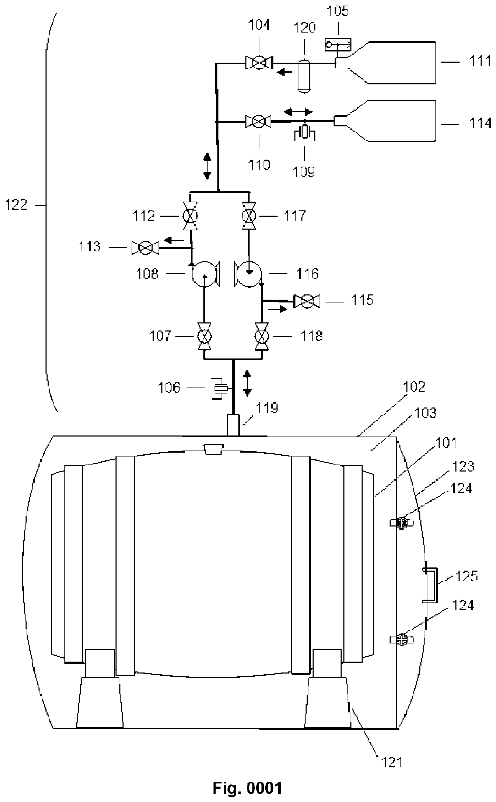

FIG. 0001 is a view of a barrel 101 inside a container 102 having a cavity 103. The container having a port 119, a support frame 121 to stabilize the wood barrel 101, and a door 123 with hinges 124 and a handle 125 to allow for the opening and closing and insertion and removal of the wood barrel 101. Connected to the port 119 is a gas transfer system 122 comprising a pressure transducer 106 to measure the pressure of the container 102; a valve 107 connected to port 119 to provide an open or closed path from the container 102; a valve 118 to provide an open or closed path to container 102 connected to the port 119; an air pump 116 connected to valve 118; a valve 115 to expel air from gas reservoir 114 connected to valve 118; an air pump 108 connected to valve 107; a valve 113 connected to air pump 108 to expel air from container 102; a valve 112 connected to air pump 108 to provide an open or closed path from air pump 108; a valve 117 connected to air pump 116 to provide an open or closed path to air pump 116; a valve 110 connected to gas reservoir 114 to provide an open or closed path to or from gas reservoir 114; a pressure transducer 109 to measure the pressure of gas reservoir 114; a gas reservoir 114 connected to valve 110; a valve 104 to provide an open or closed path from gas tank 111; a gas tank 111 connected to valve 104; a gas dryer120 connected to valve 104 to remove moisture in the gas; a valve 105 attached to gas tank 111 to open or close gas tank.

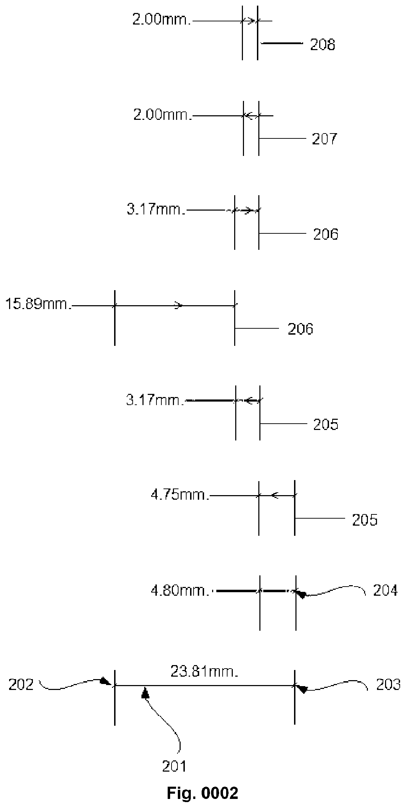

FIG. 0002 is a dimensional side view of a stave of a whiskey barrel, its reference points (201 - 204), and the sequential pressure effects (205 - 208) in millimeters. 201 The standard 23.81 mm depth of a stave for a 53-gallon whiskey barrel. 202 The exterior side of the stave. 203 The interior side of the stave. 204 The most common char #3 with a charcoal layer depth of 4.80 mm. 205 The pressure of the distilled spirit on the interior wall of the wood barrel is 1.06e+5 Pa. That pressure drives distilled spirit 4.75 mm from the interior side of the stave into the charcoal layer and 3.17 mm into the wood layer. 206 A pressurization of 6.75e+4 Pa from the exterior side of the stave will drive the distilled spirit 3.17 mm into the wood to the boundary of the interchange of the wood and charcoal layer. 207 A release of pressure of 4.74e+4 Pa allows for the distilled spirit to penetrate back 2.00 mm from the boundary of the interchange of the wood and charcoal layer into the wood layer. 208 A pressurization of 4.74e+4 Pa drives the distilled spirit 2.00 mm to the boundary of the interchange of the wood and charcoal layer.

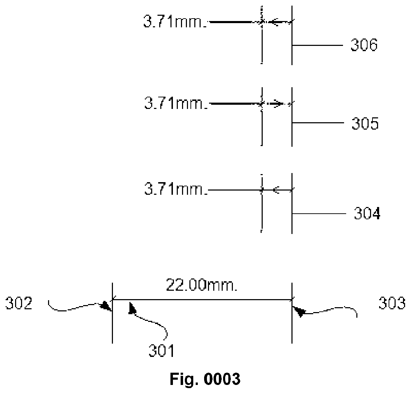

FIG. 0003 is a dimensional side view of a stave of a wine barrel, its reference points (301 - 303), and the sequential pressure effects (304 - 306) in millimeters. 301 The standard 22.00 mm depth of a stave for a wine barrel. 302 The exterior side of the stave. 303 The interior side of the stave. 304 The pressure of the wine on the interior wall of the wood barrel is 1.08e+5. That pressure drives wine 3.71 mm into the wood. 305 A pressurization of 1.08e+5 Pa will drive the wine 3.71 mm to the point of interchange of the wood and the interior side of the stave. 306 A release of 1.08e+5 Pa allows for the distilled spirit to penetrate back 3.71 mm into the wood.

**A specific example**

In accordance with a specific example of the invention, an apparatus comprising a container having a total volume of 4,810 cu. in and a gas transfer system as in FIG 1. is configured and assembled. The gas reservoir of the gas transfer system has a volume of 15 gal. The gas tank of the gas transfer system has of volume of 20 gal. The gas transfer system is connected to a port of the container. The wiring of the valves, pressure transducers, and pumps of the gas transfer system are connected to a programmable logic controller (plc), I/O modules, and 24v DC power supplies connected to AC power, creating the necessary electronic circuitry for the apparatus to operate. The software of the pic provides for the input of the prescribed pressure, pressurization time, rest time, release of pressure time, and cycles into the program. The pic reads the ladder logic and performs the instructions of the program. The specific example applies the SA/V 78.7% evaporation improvement, reducing the number of cycles from 1,300 to 277. A commercially available 5-gallon wood barrel having an exterior volume of 1,839 cu. in. is manufactured with a Char #3 and a stave thickness of 1.5 in. The wood barrel is filled with 5 gallons of commercially available unaged, 125 proof (62.5 abv) distilled spirit that had been processed with a wheated mash bill. The wood barrel is placed on the support frame inside the container and the container is closed with clamps to ensure a pressure tight seal. The cavity of the container is 2,970 cu. in. The pic program is started. The air is expelled from the gas reservoir and replaced with gas. The air is removed from the cavity of the container and replaced with gas. The pic initiates a timer for the prescribed 00:23:54 pressurization time. Gas is slowly introduced to the container such that the pressure slowly builds up in the cavity at a rate of .590 psi/min over the 00:23:54 duration of the pressurization time. The prescribed pressure of 14.105 psi is reached at the prescribed 00:23:54 of pressurization time. The pic initiates a timer for the prescribed 00:02:05 rest time. At the end of the rest time the pic initiates a timer for the prescribed 00:25:08 of release of pressure time. The gas is slowly expelled from the container such that the pressure slowly reduces in the cavity at a rate of .152 psi/min. over the 00:25:08 duration of the release of pressure time. The prescribed pressure of 10.306 psi is reached at the prescribed 00:25:08 of release of pressure time. The pic initiates a timer for the prescribed 00:02:05 rest time. At the end of the rest time the pic initiates a timer for the prescribed 00:23:54 of pressure time. Gas is slowly introduced to the container such that the pressure slowly builds up in the cavity at a rate of .158 psi/min over the 00:23:54 duration of the pressurization time. The prescribed pressure of 14.105 psi is reached at the prescribed 00:23:54 of pressurization time. The pic initiates a timer for the prescribed 00:02:05 rest time. The pic repeats the respective steps for the prescribed 2,216 cycles over a period of 81.8 days. Ambient pressure of the container is attained, the clamps are released from the container, and the wood barrel containing the distilled spirit is removed. The finished product attains the desirable qualities and attributes of an eight-year bourbon.

**Citation list**

The Federal Standards of Identity for Distilled Spirits, 27 C.F.R § 5.22 (1969)
Product specification for the Cognac or Eau-de-vie de Cognac or Eau-de-vie des Charentes controlled appellation of origin. (2018). Official Journal of the French Republic.
Definition of "Scotch Whiskey" and categories of Scotch Whiskey. Order 2009. SI 2009/2890. The Scotch Whiskey Regulations 2009, UK Statutory Instruments.

Meier, E. (2021, November 2) The Wood Database. Retrieved from web site: https://wood-database.com/wood-articles/janka-hardness/

Climate Data Online. (2021, December 4), Retrieved from National Centers for Environmental Information (NCEI). https://www.ncdc.noaa.gov/cdo-web/

Dominigues, I. et al. (2022, January 28). Role of Oak Wood Ellagitannins on the Oxygen Transfer Rate in Wine Barrels. Retrieved from PreSens Precision Sensing. https://www.presens.de/knowledge/publications

de Pracomtal, G. et al. Practical Winery and Vineyard. Types of oak grain, wine elevage in barrel. July 2014, pp 64-69.

de Abreu Neto et al. Dynamic Hardness of Charcoal Varies According to the Final Temperature of Carbonization. Energy Fuels 2018.

## Claims

1. A method of extracting phenols from a wood barrel comprising the steps of: a) placing one or more said wood barrels inside a container; b) enclosing said wood barrel in said container which serves to define a cavity; c) removing air from said cavity; d) filling said cavity with gas; e) pressurizing said cavity with said gas to a prescribed pressure sufficient to urge a distilled spirit or a wine in said wood barrel to evacuate porous structures of said wood barrel; f) allowing a duration of time sufficient for said distilled spirit or said wine in said wood barrel to evacuate said porous structures of said wood barrel; g) reducing said pressure of said cavity to a prescribed pressure sufficient to urge said distilled spirit or said wine in said wood barrel to absorb into and impregnate said porous structures of said wood barrel; h) allowing a duration of time sufficient for said distilled spirit or said wine in said wood barrel to absorb into and impregnate said porous structures of said wood barrel; i) repeating the method from step e) for a number of prescribed cycles; j) allowing said cavity to attain ambient pressure; k) opening said container; l) removing said wood barrel from said container.

2. A method according to claim 1 whereby said pressurizing said cavity with said gas is at a rate and controlling said rate such that said rate at which said pressure rises in said container during said pressurizing is sufficiently slow as to allow said distilled spirit or said wine in said wood barrel to evacuate said porous structures of said wood barrel.

3. A method according to claim 1 whereby reducing said pressure of said cavity is at a rate and controlling said rate such that said rate at which said pressure is reduced in said cavity is sufficiently slow as to allow said distilled spirit or said wine in said wood barrel to impregnate said porous structures of said wood barrel.

4. An apparatus for extracting phenols from a wood barrel comprising; a container to place, support, and enclose said wood barrel, a gas transfer system connected to said container, said gas transfer system comprising a framework incorporating a plurality of valves, a plurality of pumps, a gas reservoir, a gas tank, and two pressure transducers, comprising a means for pumping air from said container, air from said gas reservoir, gas to said container, said gas from said container, gas to said gas reservoir, and said gas from said gas reservoir, and means for transferring said +gas from said gas tank to said gas reservoir.

**Fig. 0001**

2.00mm. —————|→| ——— 208

2.00mm. —————|←| ——— 207

3.17mm. —————|→| ——— 206

15.89mm. —————→ ——— 206

3.17mm. —————|← ——— 205

4.75mm. —————|← ——— 205

4.80mm. —————|← ——— 204

202 —————| 23.81mm. |→ ——— 203

201

**Fig. 0002**

3.71mm.———— 306

3.71mm.———— 305

3.71mm.———— 304

302  ⟍  22.00mm.  ⟋  303

301

**Fig. 0003**

Europäisches
Patentamt

European
Patent Office

Office européen
des brevets

## EUROPEAN SEARCH REPORT

Application Number

**EP 22 16 0605**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2012/017110 A1 (GODOY VARO JOSE LUIS [ES]) 9 February 2012 (2012-02-09) * abstract; claims 1-29; figures 1-11 * ----- | 1-4 | INV. C12G3/07 B65D8/00 C12H1/16 C12H1/22 |
| X | US 10 633 620 B2 (DECARO MARK [US]; WEI GUOBAO [US]) 28 April 2020 (2020-04-28) * claims 1-19; figures 1-7; examples 1,2 * ----- | 1-4 | |
| X | US 2018/371387 A1 (HALL DOUGLAS B [US] ET AL) 27 December 2018 (2018-12-27) * embodiments 1 & 2; paragraphs [0011] – [013,]; claims 1-27; figure 1 * ----- | 1-4 | |

TECHNICAL FIELDS
SEARCHED (IPC)

C12G
B65D
C12H

The present search report has been drawn up for all claims

| Place of search | Date of completion of the search | Examiner |
|---|---|---|
| The Hague | 9 August 2022 | van Klompenburg, Wim |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 16 0605

This annex lists the patent family members relating to the patent documents cited in the above-mentioned European search report.
The members are as contained in the European Patent Office EDP file on
The European Patent Office is in no way liable for these particulars which are merely given for the purpose of information.

09-08-2022

| Patent document cited in search report | | Publication date | Patent family member(s) | | Publication date |
|---|---|---|---|---|---|
| WO 2012017110 | A1 | 09-02-2012 | NONE | | |
| US 10633620 | B2 | 28-04-2020 | NONE | | |
| US 2018371387 | A1 | 27-12-2018 | AU | 2016364720 A1 | 26-04-2018 |
| | | | AU | 2021202727 A1 | 27-05-2021 |
| | | | CA | 3001502 A1 | 08-06-2017 |
| | | | CN | 108368464 A | 03-08-2018 |
| | | | DO | P2018000107 A | 31-07-2018 |
| | | | EP | 3383990 A1 | 10-10-2018 |
| | | | JP | 2018534923 A | 29-11-2018 |
| | | | KR | 20180085022 A | 25-07-2018 |
| | | | NZ | 743226 A | 29-04-2022 |
| | | | US | 2018371387 A1 | 27-12-2018 |
| | | | WO | 2017095915 A1 | 08-06-2017 |
| | | | ZA | 201804389 B | 25-09-2019 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- *Scotch Whiskey Regulations,* 2009
- *The Federal Standards of Identity for Distilled Spirits,* 1969, vol. 27 (5), 22
- Product specification for the Cognac or Eau-de-vie de Cognac or Eau-de-vie des Charentes controlled appellation of origin. *Official Journal of the French Republic,* 2018
- Definition of "Scotch Whiskey" and categories of Scotch Whiskey. Order 2009. SI 2009/2890. The Scotch Whiskey Regulations. UK Statutory Instruments, 2009
- **MEIER, E.** *The Wood Database,* 02 November 2021, https://wood-database.com/wood-articles/janka-hardness
- Climate Data Online. *National Centers for Environmental Information (NCEI),* 04 December 2021, https://www.ncdc.noaa.gov/cdo-web
- **DOMINIGUES, I. et al.** Role of Oak Wood Ellagitannins on the Oxygen Transfer Rate in Wine Barrels. *PreSens Precision Sensing,* 28 January 2022, https://www.presens.de/knowledge/publications
- **DE PRACOMTAL, G. et al.** Practical Winery and Vineyard. *Types of oak grain, wine elevage in barrel,* July 2014, 64-69
- **DE ABREU NETO et al.** Dynamic Hardness of Charcoal Varies According to the Final Temperature of Carbonization. *Energy Fuels,* 2018